# EUROPEAN PATENT SPECIFICATION

(11) **EP 0 440 454 B1**
(45) Date of publication and mention of the grant of the patent: **31.05.1995**
(21) Application number: 91300731.6
(22) Date of filing: 30.01.1991
(51) Int. Cl.: H02P 6/00

(54) **Brushless DC motor**
Bürstenloser Gleichstrommotor
Moteur à courant continu sans balai

(30) Priority: 31.01.1990 JP 23173/90; 09.02.1990 JP 30882/90
(43) Date of publication of application: 07.08.1991
(73) Proprietor: MATSUSHITA ELECTRIC INDUSTRIAL CO., LTD., Kadoma-shi, Osaka-fu, 571 (JP)
(72) Inventor: Inaji, Toshio, Minoo-shi, Osaka-fu (JP); Honjo, Kenichi, Kobe-shi, Hyogo-ken (JP); Gotou, Makoto, Nishinomiya-shi, Hyogo-ken (JP)
(74) Representative: Crawford, Andrew Birkby

(56) References cited:
- DE-A- 2 429 271
- PATENT ABSTRACTS OF JAPAN vol. 14, no. 216 (E-924)(4159) 08 May 1990,& JP-A-20 51389 (SONY CORP.) 21 February 1990,
- PATENT ABSTRACTS OF JAPAN vol. 13, no. 366 (E-806)(3714) 15 August 1989,& JP-A-11 22388 (SONY CORP.) 15 May 1989,
- PATENT ABSTRACTS OF JAPAN vol. 12, no. 177 (E-613)(3024) 25 May 1988,& JP-A-62 285686 (SONY CORP.) 11 December 1987,
- PATENT ABSTRACTS OF JAPAN vol. 11, no. 138 (E-503)(2585) 02 May 1987,& JP-A-61 277394 (HITACHI LTD.) 08 December 1986,
- PATENT ABSTRACTS OF JAPAN vol. 11, no. 220 (E-524)(2667) 16 July 1987,& JP-A-62 039909 (SUMITOMO ELECTRIC IND.LTD.) 20 February 1987,
- ELECTRONIC ENGINEERING. vol. 56, no. 688, April 1984, LONDON GB page 29 S.Murugesan: "Pulsewidth multiplier uses up/down counter"

## Description

### BACKGROUND OF THE INVENTION

### 1. Field of the Invention

This invention relates to a brushless DC motor and more particularly, to a brushless DC motor which does not have a position sensor for detecting a rotational position of a permanent magnet rotor.

### 2. Description of the Prior Art

Recently, brushless DC motors have been widely used in industrial or audio and video equipment requiring higher reliability for reasons that service life can be improved as well as noise generation can be reduced resulting from such an advantage that they do not need to have a mechanical contact as would be used in conventional DC motors having a brush.

In order to perform the switching operation of a conducting phase of the stator windings of a motor, most of conventional brushless DC motors use a rotor position sensor (such as, for example, the Hall sensor) instead of using a brush. However, the rotor position sensor is not so cheap, it requires sophisticated positional adjustment for setting and increased number of wirings, so that the cost of the conventional brushless DC motors is large as compared with DC motors having a brush.

In addition, some structural limitations will be frequently imposed thereupon for the reason that a rotor position sensor has to be set inside the motor itself. A recent trend is that accompanied with the compactization of industrial or audio and video equipment, motors to be used are made small in size and thickness, which means that the sectional space where a rotor position sensor such as the Hall sensor is to be provided becomes extremely small. Thus, several types of brushless DC motor having no position sensor such as, for example, the Hall sensor have been proposed previously.

Out of which, a brushless DC motor disclosed, for example, in Japanese Patent Application Laid-Open No. 55-160980 is based on the so-called half wave driving method in which an electric current is applied unidirectionally to stator windings of the motor. With this method, electromotive forces induced in two stator windings being stationary out of three-phase stator windings are detected, and the signals thus detected are operationally processed to determine the next conducting phase thereby to supply an electric current unidirectionally to the stator windings in a successive manner.

With this method, however, because the rotor is stationary when starting a motor, no counter electromotive force is generated in each of the stator windings. As a result, in such a brushless DC motor as described above according to the prior art, a starting circuit is specially provided for exciting a specific stator winding thereby to determine the initial point of the rotor in advance. In this case, however, even if only one phase of the stator windings is excited in order to determine the initial position of the rotor as shown above, the position of the rotor becomes vibrative and difficult to stabilize, resulting in an increase in starting time.

In addition, the brushless DC motor according to the prior art is based on the half wave driving method in which an electric current is supplied unidirectionally to its stator windings, so that its driving circuit can be made simple in structure on the one hand, but on the other hand, the utility and efficiency of the stator windings are low as compared with a brushless DC motor based on the full wave driving method in which an electric current is supplied bidirectionally to its stator windings, so that a torque to be developed becomes small.

Also, disclosed, for example, in Japanese Patent Application Laid-Open No. 62-260586 is a brushless DC motor which is based on the so-called full wave driving method in which an electric current is supplied bidirectionally to its stator windings. An electric current to be flowed to its stator windings is switched forcibly and successively when starting by a starting pulse signal outputted from a starting pulse generating circuit thereby to drive the motor. When the rotational speed of the rotor is accelerated and counter electromotive forces are induced in the stator windings, the zero-crossing points of the counter electromotive forces are detected thereby to delay its output signal by a constant period of time by a monostable multi-vibrator, thus the timing of conducting an electric current being determined.

With the prior art as described above, the stator windings are subjected to forcible and successive switching operation by a pulse signal outputted from a starting circuit. In this case, however, the rotor becomes vibrative in rotation. As a result, even when the zero-crossing point of each counter electromotive force can be properly detected, the switching is difficult to be properly operated from the starting mode to drive the rotor by switching the stator windings forcibly and successively to the normal position detecting mode to do it by detecting the zero-crossing points of counter electromotive forces induced in the stator windings. That is, the timing of switching from the starting mode to the normal position detecting mode of the rotor is difficult technologically, resulting in an increase in starting time of the motor.

In addition, in a brushless DC motor according to the prior art as described above, such a method that the conducting phase is determined by delaying a pulse signal generated at the zero-crossing point of a counter electromotive force induced in each stator winding by a constant period of time through a monostable multi-vibrator is used. In this case, however, the delay time is constant independently of the rotational speed of the motor, which means that it is not suitable for such an application that the rotational speed has to be changed, thus lacking in flexibility of application.

In these brushless DC motors not having a rotor position sensor as described above, the rotor is generally stationary when starting, and no counter electromotive force is generated in each stator winding. As a result, the conducting phase at the initial stage is not allowed to be determined and such a problem has been further pointed out that they are outstandingly inferior in starting characteristic to DC motors having a rotor position sensor.

Also, these brushless DC motors not having a rotor position sensor are considered as a kind of synchronous motor in that the phase switching is forcibly operated when starting, and the frequency for phase-switching suitable for the starting operation is largely varied depending on the magnitude of a load to be applied to the motor or the inertia of the rotor. In some cases, the zero-crossing point of a counter electromotive force induced in each stator winding may not be allowed to be properly detected eternally, so that such a problem has been further pointed out that the switching operation from the starting mode in which the rotor is driven by switching the stator windings forcibly and successively to the normal position detecting mode in which the rotor is driven by detecting the zero-crossing point of each counter electromotive force is difficult to do properly.

JP-A-62 285686 discloses a sensorless brushless DC motor which comprises a zerocross comparator for detecting a pulse signal indicating a reference position of the rotor based on the inverse electromotive forces induced in the stator windings, a delay circuit for delaying the pulse signal by a predetermined fixed time period to obtain a delayed pulse signal, and a drive pulse generator logic circuit for generating from the delayed pulse signal an energizing phase switching signal for switching the phase of the stator windings. The delay circuit is a monostable multivibrator which delays the pulse signal from the zerocross comparator always by a fixed time period.

The present invention provides a brushless DC motor comprising:
a plurality of stator windings;
counter electromotive force detecting means for detecting zero-crossing points of counter electromotive forces respectively induced in said plurality of stator windings to obtain a pulse signal train responsive to the counter electromotive forces;
pulse generating means for generating a delay pulse signal delayed from said pulse signal train;
logical pulse generating means for generating a plurality of delay pulse signals in response to said delay pulse signal; and
power supply means which receives an output signal from said logical pulse generating circuit as a position signal of a rotor for supplying an electric power to said plurality of stator windings in response to said position signal,
characterized in that said pulse generating means measures a period of said pulse signal train and generates, as said delay pulse signal, a signal delayed from said pulse signal train by a time proportional or approximately proportional to a period of said pulse signal train.

With the above-mentioned structure, a brushless DC motor of this invention pulse-shapes the zero-crossing points of counter electromotive forces respectively induced by a plurality of stator windings to convert them into a pulse signal train. The period of the pulse signal train thus obtained is measured and a position signal of the rotor is generated in response to the period thus measured. As a result, even if the motor changes its rotational speed, no change of the conducting phase of a stator winding to be subsequently conducted results.

Accordingly, a brushless DC motor of this invention can be easily applied for such an application that its rotational speed is required to be changed. This means that such a disadvantage of conventional brushless DC motor not having a rotor position sensor as to become unstable in driving operation when rotational speed is changed can be eliminated.

In addition, in a brushless DC motor of this invention, even if the counter electromotive force detecting means does not output a pulse signal when starting, it outputs a pseudo pulse signal to switch the conducting phases of the stator windings in a successive manner. As a result, even if a special starting circuit is not provided, a pseudo pulse signal can be easily outputted when starting, and the conducting phases of the stator windings can be switched in a forcible and successive manner by the pseudo pulse signal thus outputted. And when the counter electromotive force detecting means detects zero-crossing points if the counter electromotive forces, the switching can be rapidly operated from the starting mode to drive the rotor by switching the stator windings forcibly and successively to the normal position detecting mode to do it by detecting the zero-crossing points of counter electromotive forces induced in the stator windings, thus being capable of obtaining a starting characteristic compatible with that obtained in conventional motors having a rotor position sensor.

In addition, since it is unnecessary to use a rotor position sensor as would be used in conventional brushless DC motors, a brushless DC motor of this invention makes it possible to eliminate a sophisticated setting position adjustment of the sensor as well as to reduce the number of wirings, resulting in a vast reduction in cost.

Further in addition, since it is unnecessary to provide a rotor position sensor into the motor, no structural limitation can be imposed thereupon, largely contributing to the possibility of making it small in size and thickness.

Still further in addition, with the above-mentioned structure, the counter electromotive force detecting means detects only zero-crossing points of counter electromotive forces induced in the stator windings, so that in spite of no need to use a position sensor such as the Hall sensor, a brushless DC motor of this invention can supply an electric current bidirectionally to each stator winding, meaning that a brushless DC motor based on the full wave driving method can be easily provided. As a result, as compared with a motor based on the half wave driving method in which an electric current is supplied unidirectionally to each stator winding, a motor outstandingly superior in utility and efficiency of stator windings as well as in torque to be developed can be provided.

### BRIEF DESCRIPTION OF THE DRAWINGS

Fig. 1 is a block diagram of a brushless DC motor in accordance with one embodiment of this invention.

Fig. 2 is a circuit diagram of a motor and a power supplying circuit for supplying a power to stator windings thereof shown in Fig. 1.

Fig. 3 is a diagram showing a signal waveform outputted from each member of the circuit shown in Fig. 2.

Fig. 4 is a circuit diagram of a counter electromotive force detecting circuit shown in Fig. 1.

Fig. 5 is a diagram showing a signal waveform outputted from each member of the circuit shown in Fig. 4.

Fig. 6 is a block diagram of a pulse generating circuit showing an example of that shown in Fig. 1.

Fig. 7 is a diagram showing a signal waveform outputted from each member of the circuit shown in Fig. 6 when rotating stationarily.

Fig. 8 is a diagram showing a signal waveform outputted from each member of the circuit shown in Fig. 6 when starting.

Fig. 9 is a block diagram of a pulse generating circuit showing another example of that shown in Fig. 1.

Fig. 10 is a diagram showing a signal waveform outputted from each member of the circuit shown in Fig. 9 when rotating stationarily.

Fig. 11 is a diagram showing a signal waveform outputted from each member of the circuit shown in Fig. 9 when starting.

Fig. 12 is a block diagram of a pulse generating circuit showing further example of that shown in Fig. 1.

Fig. 13 is a diagram showing a signal waveform outputted from each member of the circuit shown in Fig. 12 when starting.

Fig. 14 is a block diagram of a pulse generating circuit showing still further example of that shown in Fig. 1.

Fig. 15 is a diagram showing a signal waveform outputted from each member of the circuit shown in Fig. 14 when rotating stationarily.

Fig. 16 is a diagram showing a signal waveform outputted from each member of the circuit shown in Fig. 14 when starting.

Fig. 17 is a block diagram of a logical pulse generating circuit shown in Fig. 1.

Fig. 18 is a diagram showing a signal waveform outputted from each member of the circuit shown in Fig. 17.

### DESCRIPTION OF THE PREFERRED EMBODIMENTS

Preferred embodiments of this invention will be described below while referring to the drawings.

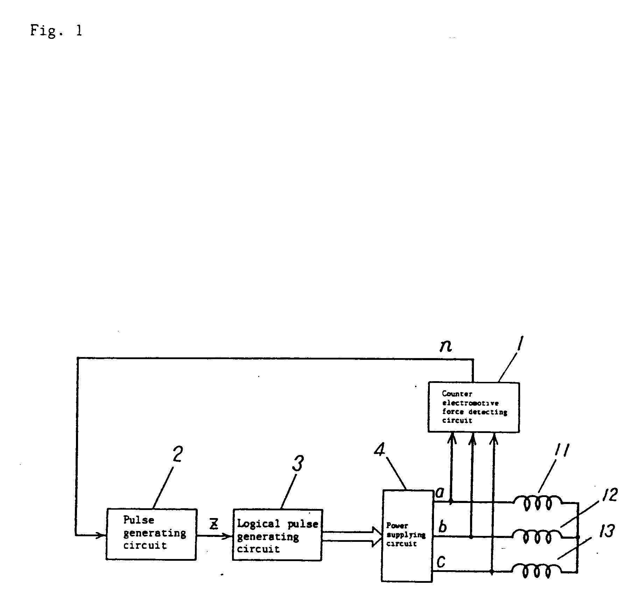

Fig. 1 is a block diagram of a brushless DC motor in accordance with one embodiment of this invention. In Fig. 1, the reference numeral 1 indicates a counter electromotive force detecting circuit to receive counter electromotive forces respectively induced in three-phase stator windings 11, 12 and 13. The counter electromotive force detecting circuit 1 detects respective zero-crossing points of the three-phase counter electromotive forces to convert into a pulse train n. The pulse train n shows the zero-crossing point of each of the three-phase counter electromotive forces thus induced in the stator windings 11, 12 and 13. The pulse train n outputted from the counter electromotive force detecting circuit 1 is inputted to a pulse generating circuit 2. The pulse generating circuit 2 first measures a period of the pulse train n thus inputted and makes it delay by a period of time approximately half the period thus measured. The reference numeral 3 indicates a logical pulse generating circuit for frequency-dividing a pulse signal z outputted from the pulse generating circuit 2 and outputting six-phase pulse signals having the same frequency as that of the counter electromotive forces induced in the stator windings 11, 12 and 13. The six-phase pulse signals generated through the logical pulse generating circuit 3 become a position signal of a rotor and sent to a power supplying circuit 4. The power supplying circuit 4 supplies an electric current bidirectionally to each of the stator windings 11, 12 and 13 in a successive manner in response to a position signal outputted from the logical pulse generating circuit 3.

With the structure shown above, the operation of a brushless DC motor of this embodiment will be explained in detail below.

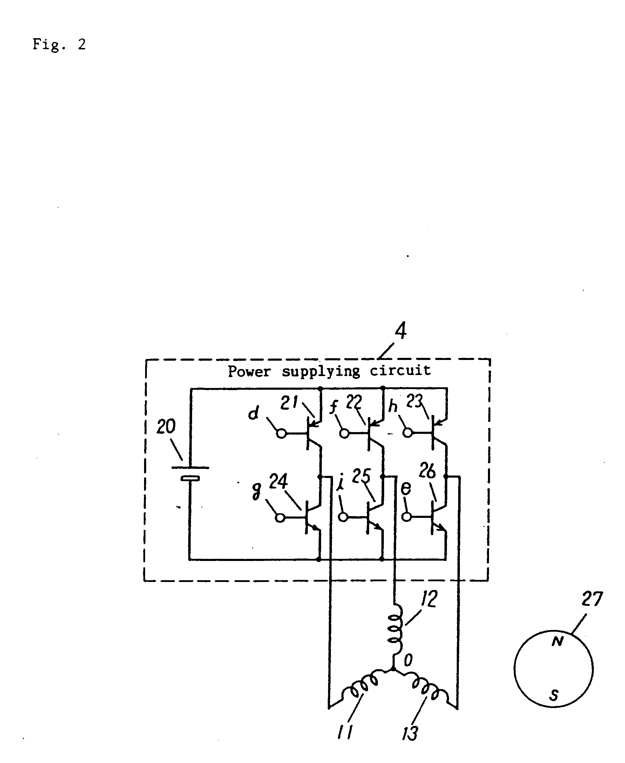

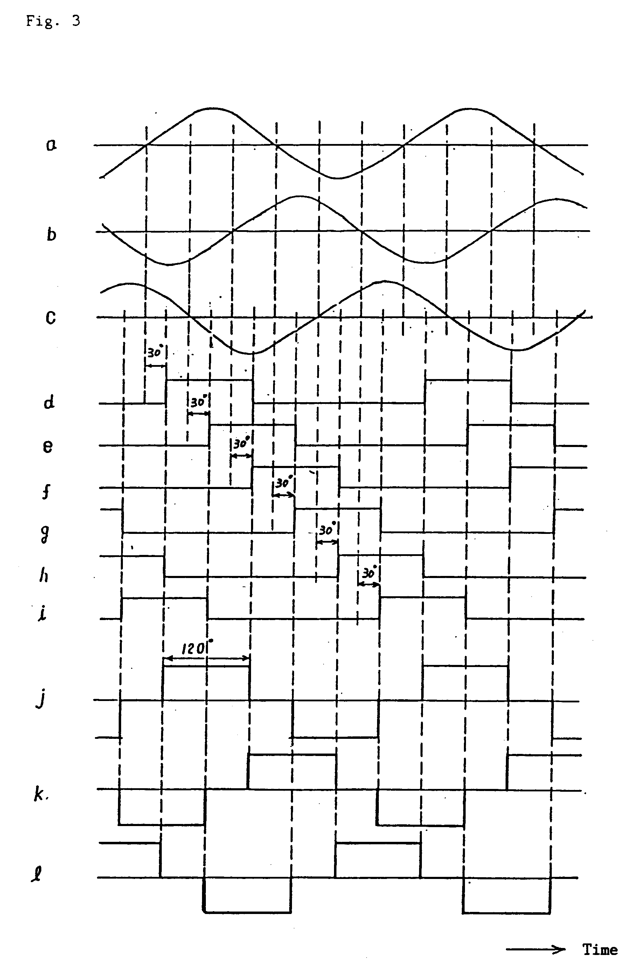

Fig. 2 is a circuit diagram of a motor and a power supplying circuit 4 shown in Fig. 1. Signal waveform outputted from each member of the circuit shown in Fig. 2 is shown in Fig. 3.

In Fig. 2, the reference numeral 27 indicates a permanent magnet rotor, 11, 12 and 13 each does a stator winding, and 21, 22, 23, 24, 25 and 26 each a driving transistor for supplying an electric power to each of the stator windings 11, 12 and 13 based on the ON-OFF operation. Of these driving transistors, 21, 22 and 23 are PNP transistors and 24, 25 and 26 NPN transistors. The reference numeral 20 indicates a power source. Brushless DC motor is generally driven by applying the six-phase pulse signals obtained through the pulse generating circuit 2 in response to a position signal of the rotor 27 respectively to the bases of the driving transistors 21, 22, 23, 24, 25 and 26. Waveforms of these six-phase pulse signals are shown in Figs. 3 d, e, f, g, h and i. In this case, however, the PNP transistors 21, 22 and 23 each is applied with the pulse signal to its base in the direction that an electric current is to be taken out and on the other hand, the NPN transistors 24, 25 and 26 each is applied with it to its base in the direction that it is to be taken in. First, the transistors 21 and 25 are conducted to flow an electric current to the stator windings 11 and 12. Next, the transistors 21 and 26 are conducted to flow an electric current to the stator windings 11 and 13. Such a phase switching operation is carried out in a successive manner thereby to rotate the permanent magnetic rotor 27. In this case, electric currents as shown in Figs. 3 j, k and l are supplied bidirectionally to the stator windings 11, 12 and 13. Also, under the rotational condition of the permanent magnet rotor 27, at terminals of the stator windings 11, 12 and 13 are induced voltages (counter electromotive forces) as shown in Figs. 3a, b and c, respectively. Each of six-phase pulse signals as shown at d, e, f, g, h and i of Fig. 3 shows a position signal of the rotor 27 and respectively have phase relations as shown in Fig. 3 with waveforms of the counter electromotive forces a, b and c. In this case, note that the rising edge of each position signal is delayed in phase by 30° in terms of electrical angle from the zero-crossing point of a corresponding one of the counter electromotive forces a, b and c. As a result, in order to rotationally drive a permanent magnet rotor with no use of a rotor position sensor such as the Hall sensor as in this invention, such a signal processing that zero-crossing points of counter electromotive forces a, b and c respectively induced in the stator windings 11, 12 and 13 are detected thereby to make its output pulse signal delay by 30° in terms of electrical angle will become necessary.

Explanations will be further made on the signal processing operation of each member of this embodiment.

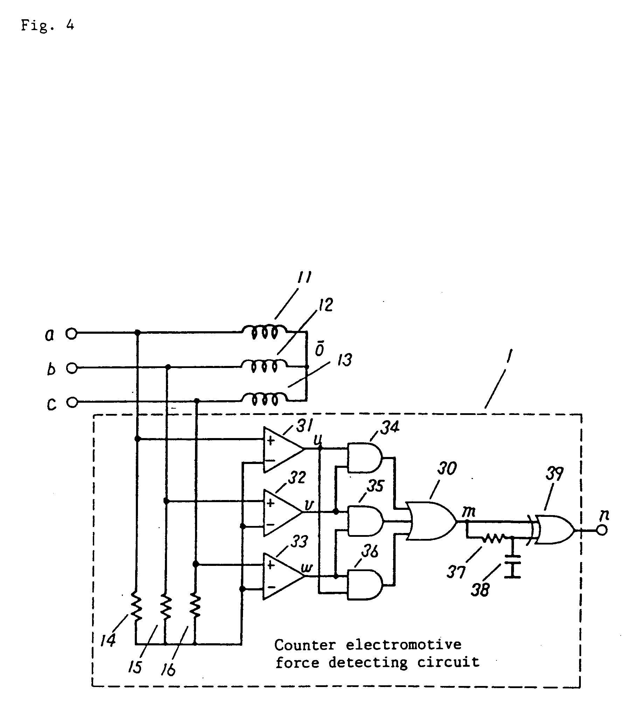

Fig. 4 is a circuit diagram of a counter electromotive force detecting circuit 1 shown in fig. 1.

In Fig. 4, reference numerals 14, 15 and 16 each indicates a resistor whose one terminal is connected with a corresponding one of the stator windings 11, 12 and 13 and whose other terminal is connected to a common connecting point, 31, 32 and 33 each indicates a comparator whose one input terminal (+) is connected with each of the stator windings 11, 12 and 13 and whose other input terminal (-) is connected with the common connecting point of the resistors 14, 15 and 16, and 34, 35 and 36 each indicates an AND circuit. The AND circuits 34, 35 and 36 are connected at their input terminals with output terminals of the comparators 31 and 32, the comparators 32 and 33, and the comparators 33 and 31, respectively. Each of outputs from the AND circuits 34, 35 and 36 is inputted to an OR circuit 30. An exclusive OR circuit 39 receives at one input terminal thereof a signal directly outputted from the OR circuit 30 and at the other input terminal thereof a signal obtained by delaying the output signal from the OR circuit 30 by a time constant specified by a resistor 37 and a capacitor 38 as another input signal.

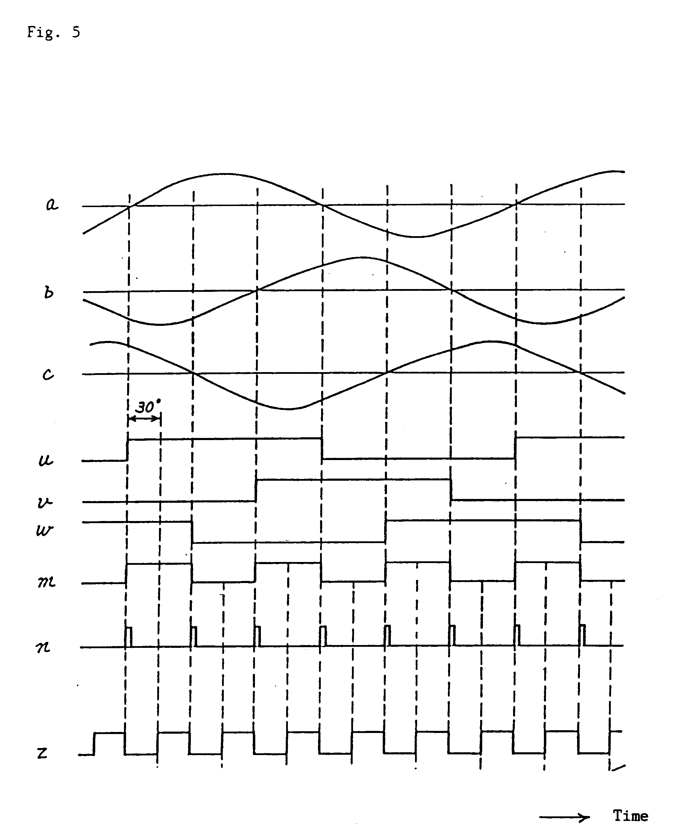

The operation of the counter electromotive force detecting circuit 1 shown in Fig. 4 will be explained by referring to Fig. 5.

The resistors 14, 15 and 16 in Fig. 4 are respectively connected with the stator windings 11, 12 and 13, so that the same electric potential as that of the neutral point 0 of the stator windings 11, 12 and 13 can be obtained at the common connecting point of the resistors 14, 15 and 16. As a result, as the motor, there is no need to take out a signal line specifically from the neutral point of the stator windings 11, 12 and 13. Counter electromotive forces a, b and c respectively induced in the stator windings 11, 12 and 13 are respectively inputted to input terminals (+) of the comparators 31, 32 and 33, and the electric potential of the neutral point of the stator windings 11, 12 and 13 obtained at the common connecting point of the resistors 14, 15 and 16 is inputted to the input terminals (-) of them. Thus, at terminals of the comparators 31, 32 and 33, pulse signals having waveforms as shown in Figs. 5 u, v and w can be respectively obtained by waveform-shaping the counter electromotive forces a, b and c thereby coinciding the pulse edges of them with the zero-crossing points of the counter electromotive forces a, b and c. The waveform of an output signal from the OR circuit 30 as a member of the counter electromotive force detecting circuit 1 is shown in Fig. 5 m, which has a pulse train having rising and falling pulse edges coincided with zero-crossing points of three-phase counter electromotive forces a, b and c. Fig. 5 n shows a waveform of a signal obtained by differentiating the both edges of the output signal m of the OR circuit 30. That is, the exclusive OR circuit 39, the resistor 37 and the capacitor 38 make a circuit for differentiating both edges of a pulse, in which the exclusive OR circuit 39 outputs a pulse signal at the zero-crossing point of each of three-phase counter electromotive forces a, b and c thereby to output a pulse train having six pulses (by 60° in terms of electrical angle) per period of each of the counter electromotive forces a, b and c. Fig. 5 z shows an output signal of the pulse generating circuit 2, which has a pulse signal waveform whose rising edge is delayed by 30° in terms of electrical angle after detection of the timing of the rising edge of the pulse train shown in Fig. 5 n.

Next, the operation of the pulse generating circuit 2 shown in Fig. 1 will be explained in detail.

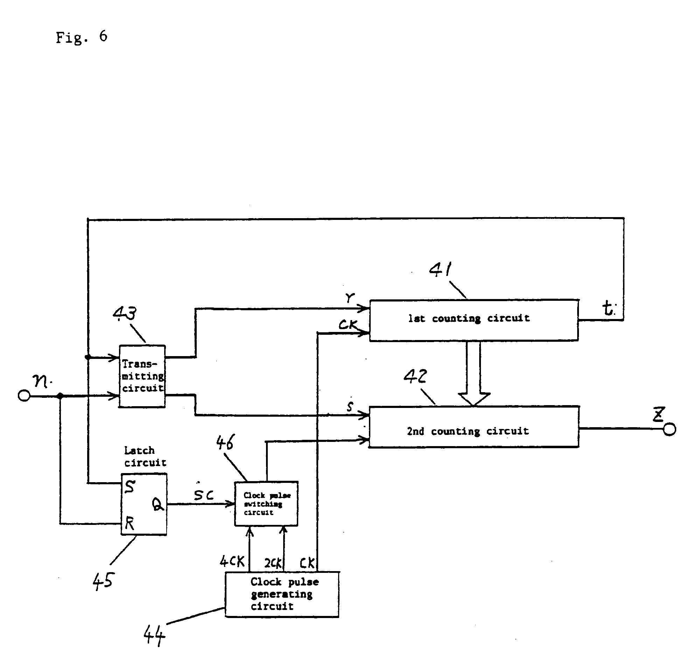

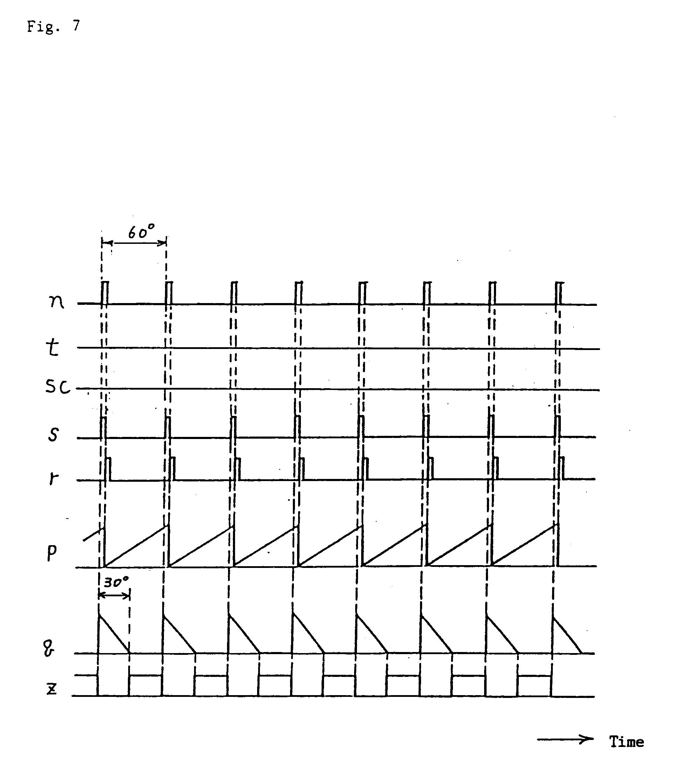

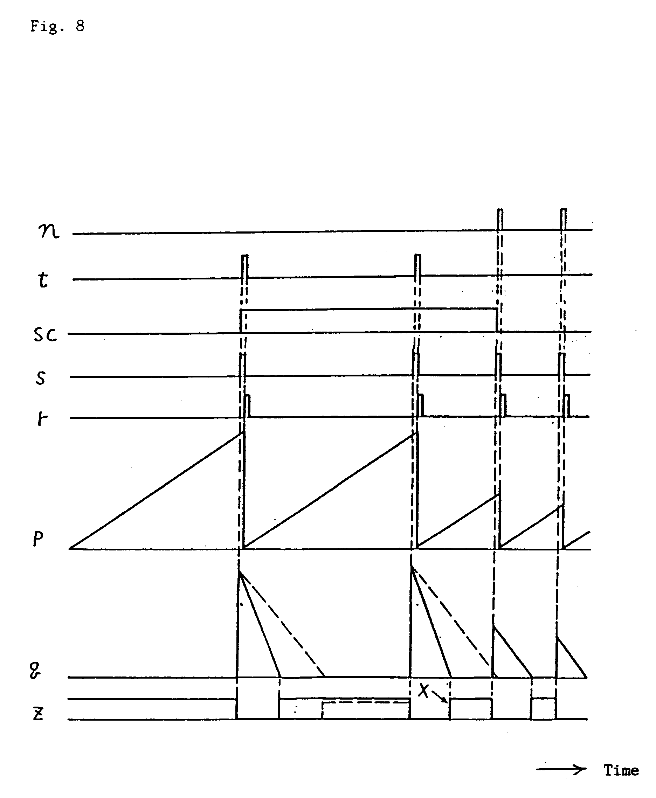

Fig. 6 is a block diagram of a pulse generating circuit showing an example of the pulse generating circuit 2 in Fig. 1. Waveform of an output signal from each member of the circuit shown in Fig. 6 when a motor is being normally rotated is shown in Fig. 7 and that when it is to be started is shown in Fig. 8.

In Fig. 6, the reference numeral 41 indicates a first counting circuit, 42 does a second counting circuit and 44 a clock pulse generating circuit. The first counting circuit 41 outputs a carry flag signal t when its count value is overflowed, and the second counting circuit 42 outputs a zero flag signal z when its count value becomes zero. The reference numeral 43 indicates a transmitting circuit to receive the pulse train n outputted from the counter electromotive force detecting circuit 1 and the pulse signal t outputted from the first counting circuit 41. The transmitting circuit 43 outputs a reset pulse r to the first counting circuit 41 for resetting the count value thereof and a load pulse S to the second counting circuit 42 for loading the count value of the first counting circuit 41. The reference numeral 45 indicates a latch circuit having a set terminal S for inputting the pulse signal t outputted from the first counting circuit 41, a reset terminal R for inputting the pulse train n outputted from the counter electromotive force detecting circuit 1 and an output terminal Q for outputting a switching signal sc to a clock pulse switching circuit 46. A clock pulse generating circuit 44 generates three kinds of clock pulses, ck, 2ck and 4ck, out of which the clock pulse ck is inputted to the first counting circuit 41, and the clock pulses 2ck and 4ck (meaning that their clock frequencies are respectively twice and quadruple that of the clock pulse ck) are inputted to the clock pulse switching circuit 46. The clock pulse switching circuit 46 selects either clock pulse 2ck or 4ck in response to the inputted switching signal sc thereby outputting it to the second counting circuit 42 as a clock pulse signal.

The operation of the pulse generating circuit shown in Fig. 6 when a motor is being rotated normally will be explained by referring to Fig. 7. As shown in Figs. 7 n and t, the counter electromotive force detecting circuit 1 outputs a pulse train n of a constant interval and the first counting circuit 41 does not output the pulse signal t, so that an output signal from the Q output terminal of the latch circuit 45 can be reset and the switching signal sc is allowed to be remained as "L" (low level) as shown in Fig. 7. When the switching signal sc is "L", the clock pulse switching circuit 46 is made to be adapted to select the clock pulse 2ck thereby to send it to the second counting circuit 42. The first counting circuit 41 continues to up-count the clock pulse 2ck until the reset pulse r outputted from the transmitting circuit 43 is received. Since the reset pulse r has the same frequency as that of the pulse train n outputted from the counter electromotive force detecting circuit 1, the count value of the first counting circuit 41 results in counting the period of the pulse train n outputted from the counter electromotive force detecting circuit 1. Such a state as shown above is shown analogically in Fig. 7 p. The count value p of the first counting circuit 41 is transmitted to the second counting circuit 42 as an initial value at the timing of the load pulse s outputted from the transmitting circuit 43. The second counting circuit 42 down-counts the count value p obtained by counting the period of pulse train n with the clock pulse of 2ck, so that the count value can be made zero at the middle point of the pulse train of the load pulse s (or the rising edge of the pulse train n). Such a state as shown above is shown analogically in Fig. 7 q. The second counting circuit 42 is made to be adapted to output a zero flag signal when the count value is zero, so that it can output a delay pulse signal z as shown in Fig. 7 z. Rising edges of the pulse train n outputted from the counter electromotive force detecting circuit 1 indicate zero-crossing points of the counter electromotive forces a, b and c respectively induced in the stator windings 11, 12 and 13, so that the interval of the pulse train s outputted at rising edges of the pulse train n is equivalent to the electrical angle of 60°. As a result, the pulse signal z shown in Fig. 7 has rising edges just delayed by 30° in terms of electrical angle from zero-crossing points of the counter electromotive forces a, b and c and be outputted as a delay pulse signal to the logical pulse generating circuit 3. In addition, between the phase of the load pulse signal s and that of the reset pulse signal r, there exists a relation as shown in Fig. 7. The fact that the reset pulse r is delayed in phase from the load pulse s is to make sure of transmitting the count value of the first counting circuit 41 to the second counting circuit 42. Also, referring to the drawings, a pulse width of each of the pulses r and s is made large for the sake of convenience, it is sufficiently small as compared with the pulse period.

Next, the operation of the pulse generating circuit 2 when a motor is to be started will be explained by referring to Fig. 8. The first counting circuit 41 continues to up-count the clock pulse ck until the reset pulse r outputted from the transmitting circuit 43 is received. In this case, however, the rotor is remained stationary, so that the counter electromotive force detecting circuit 1 does not output the pulse train n. As a result, the count value of the first counting circuit 41 is monotonously increased as shown in Fig. 8 p and when the count value is overflowed, the first counting circuit 41 outputs a pulse signal t to the transmitting circuit 43 and the latch circuit 45. The transmitting circuit 43 receives the pulse signal t and outputs the reset pulse signal r and load pulse signal s. The pulse signal t is inputted to the set terminal s of the latch circuit 45, so that the switching signal sc outputted from the latch circuit 45 becomes "H" (high level) as shown in Fig. 8 sc. When the switching signal sc becomes "H", the clock pulse switching circuit 46 is made to be adapted to select the clock pulse 4ck from the clock pulse generating circuit 44 thereby to send it to the second counting circuit 42. The second counting circuit 42 loads the initial value with the load pulse s and down-counts the count value and when the count value thus down-counted becomes zero, outputs a pulse signal z as a zero flag. The pulse signal z shown in Fig. 8 is equivalent to a pseudo output pulse signal when the motor is started and sent to the logical pulse generating circuit 3. When the motor is to be started, the counter electromotive force detecting circuit 1 does not output the pulse train n and the phase signal t substitutionally performs the phase switching operation of the stator windings 11, 12 and 13. As a result, the permanent magnet rotor 27 of the motor starts to rotate by the pseudo output pulse z outputted from the pulse generating circuit 2. And when the pulse train n as shown in Fig. 8 is outputted from the counter electromotive force detecting circuit 1, the latch circuit 45 is reset by the pulse train n thus outputted and the switching signal sc outputted therefrom becomes "L". In this case, however, if the second counting circuit 42 is made to be adapted to down-count the inputted clock pulse as remained as 2ck, the count value obtained through the second counting circuit 42 becomes as shown by the dotted line in Fig. 8 q. As clear from the waveform shown by the dotted line in Fig. 8 q, when the motor is to be started, before the second counting circuit 42 down-counts the clock pulse and the count value becomes zero, such a case that the count value of the first counting circuit 41 is further transmitted thereto may be happened. In such a case, the count value of the second counting circuit 42 does not become zero, thus the pulse signal z being not outputted. Accordingly, a pulse x as shown in Fig. 8 z is not generated, so that the phase switching operation between the stator windings 11, 12 and 13 can not be carried out properly and smooth acceleration of the motor cannot be expected.

Then, if the pulse generating circuit 2 is structured such that when the transmitting circuit 43 receives the pulse signal t, a clock pulse outputted from the clock pulse switching circuit 46 to the second counting circuit 42 is switched from 2ck to 4ck, the initial value sent to the second counting circuit 42 is down-counted with the clock pulse of 4ck. Thus, the count value will become zero in a time half that obtained when down-counted with the clock pulse of 2ck. This is shown by the continuous line in Fig. 8 q. As a result, the above-mentioned case that the count value of the first counting circuit 41 is further transmitted to the second counting circuit 42 before the count value thereof becomes zero is not happened. This means that as the waveform shown by the continuous line in Fig. 8 q, the count value of the second counting circuit 42 surely becomes zero thereby outputting the pulse signal z. Then, the second counting circuit 42 outputs the pulse signal z as shown in Fig. 8 z under the same operational condition as in the normal rotation of the motor explained above. The pulse signal is sent to the logical pulse generating circuit 3 and through the power supplying circuit 4, the conducting phase switching between the three-phase stator windings 11, 12 and 13 is operated in a successive manner. Thus, the motor is smoothly accelerated, resulting in obtaining good starting characteristic.

In addition, in the pulse generating circuit shown in Fig. 6 as one embodiment of this invention, the clock signal to be inputted to the second counting circuit has a frequency twice that to be inputted to the first counting circuit, but it may be of an integer multiple of that.

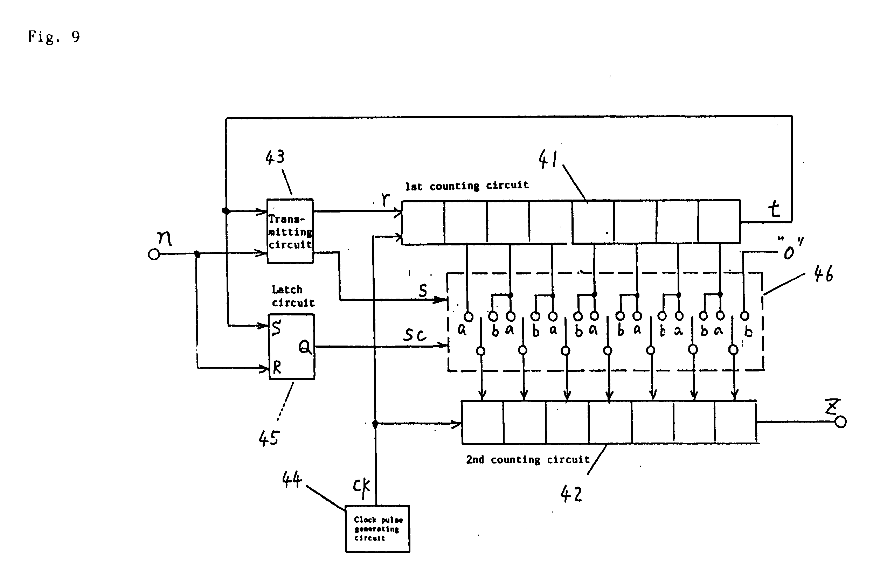

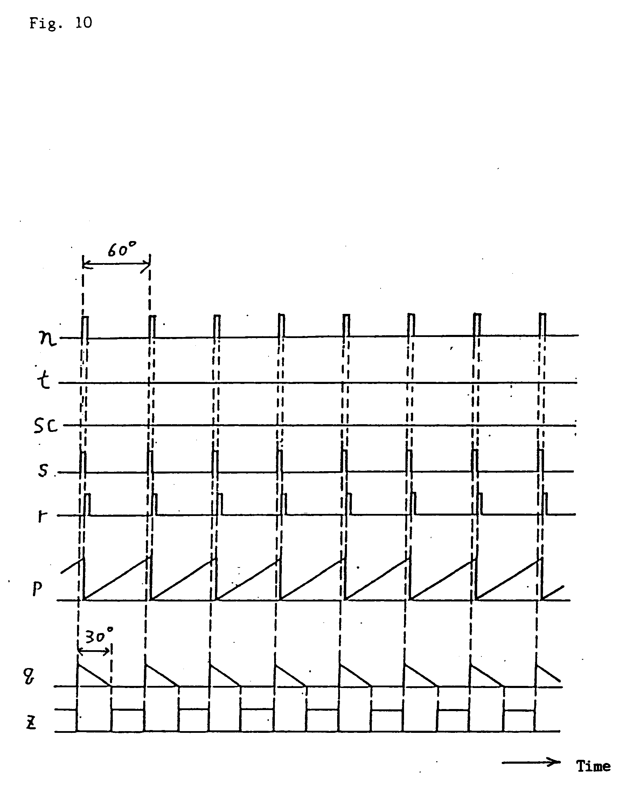

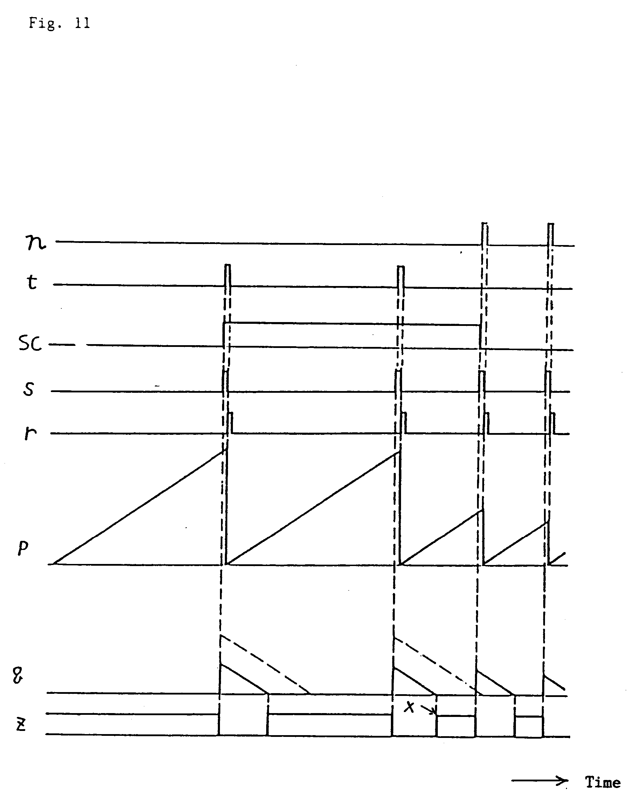

Fig. 9 is a block diagram of a pulse generating circuit showing another example of the pulse generating circuit 2 shown in Fig. 1. Waveform of an output signal from each member of the circuit shown in Fig. 9 when a motor is being rotated normally is shown in Fig. 10 and that when it is to be started is shown in Fig. 11.

In this case, members having the same functions as those of members shown in Fig. 6 have the same reference numerals and their explanations are omitted for the sake of eliminating duplication.

In Fig. 9, a first counting circuit 41 is made of an eight-bit digital counter and a second counting circuit 42 a seven-bit digital counter. The first counting circuit 41 and second counting circuit 42 have the same clock ck inputted. The reference numeral 46 is a switch transmitting circuit made of seven switches and connected to either contact point a or b for only a small period of time by a load pulse s outputted from a transmitting circuit 43. Also, to the switch transmitting circuit 46 is inputted a switching signal sc from a latch circuit 45, and when the load pulse s is inputted under such a state that the switching signal sc is "L", the switch transmitting circuit 46 is connected to the contact point a, and when it is inputted under such a state that it is "H", it is connected to the contact point b. When the switch transmitting circuit 46 is in the connection with the contact point a, bits excepting the least significant bit of the count value of the first counting circuit 41 (upper 7 bits in an example shown in Fig. 9) are sent to the second counting circuit 42. Also, when the switch transmitting circuit 46 is connected to the contact point b, bits excepting 2 bits from the least significant bit of the count value of the first counting circuit 41 (upper 6 bits in the example shown in Fig. 9) are sent to the second counting circuit 42 and to the most significant bit of the second counting circuit 42 is sent "0".

The operation of the pulse generating circuit shown in Fig. 9 when a permanent magnet rotor 27 is being normally rotated will be explained by referring to Fig. 10.

When a motor is under the normal rotational condition, a Q output signal of the latch circuit 45 is reset and the switching signal sc is remained as "L" as shown in Fig. 10. As a result, the switch transmitting circuit 46 is connected to the contact point a when the load pulse s is inputted, so that bits excepting only the least significant bit of the count value p of the first counting circuit 41 are transmitted to the second counting circuit 42. As a result, as shown in Fig. 10 q, a value half the count value p of the first counting circuit 41 is given to the second counting circuit 42 as the initial value. Thus, the second counting circuit 42 down-counts the value of p/2 equivalent to the half of the count value obtained by counting the frequency of a pulse train n with the clock pulse of ck, so that the count value becomes zero at the middle point of the pulse train of the load pulse s (or at the rising edges of the pulse train n). Such a state is analogically shown in Fig. 7 q. The second counting circuit 42 outputs a zero flag signal when the count value becomes zero thereby outputting a delay pulse as shown in Fig. 10 z.

Next, the operation of the pulse generating circuit shown in Fig. 9 when a motor is to be started will be explained below by referring to Fig. 11. When it is started, the counter electromotive force detecting circuit 1 does not output the pulse train n and the first counting circuit 41 continues to up-count the clock pulse ck. As a result, the count value of the first counting circuit 41 is monotonously increased as shown in Fig. 11 p, and when it is overflowed, the first counting circuit 41 outputs a carry flag signal t to send it to the transmitting circuit 43 and the latch circuit 45. Thus, an output signal from the latch circuit 45 becomes "H" as shown in Fig. 11 sc. If the load pulse s is inputted under such state, the switch transmitting circuit 46 is connected to the contact point b. Thus, to the second counting circuit 46 are sent bits excepting only 2 bits from the least significant bit of the count value p of the first counting circuit 41. So sent that as shown by the continuous line in Fig. 11 q, a value quarter the count value p of the first counting circuit 41 (upper 6 bits) is given to the second counting circuit 42 as the initial value. In this case, however, suppose that as shown by the dotted line in Fig. 11 q, when the transmitting circuit 43 receives the pulse signal t, the value of p/2 (upper 7 bits) half the count value of the first counting circuit 41 is sent directly to the second counting circuit 42. Then, as clear from the waveform shown by the dotted line in Fig. 11 q, when the motor is started, before the second counting circuit 42 down-counts the initial value of p/2 to obtain its count value of zero, the count value of the first counting circuit 41 may be further sent to the second counting circuit 42. In such a case, the count value of the second counting circuit 42 does not become zero thereby not to output the delay pulse z. as a result, a pulse x as shown in Fig. 11 z is not generated. Therefore, the phase switching operation cannot be properly carried out between the stator windings, which means that smooth acceleration of the motor cannot be expected. So, when the transmitting circuit 43 receives the carry flag signal t when starting, the value of p/2 which is the half value of the count value of the first counting circuit 41 (in this case, upper 7 bits of the first counting circuit 41) is not sent directly to the second counting circuit 42, but the switch transmitting circuit 46 is connected to the contact point b for a short period of time during transmission. Thus, the value of p/4 which is quarter as small as the count value of the first counting circuit 41 (in this case, upper 6 bits of the first counting circuit 41) is sent to the second counting circuit 42, which is shown by the continuous line in Fig. 11 q. As a result, the transmission of the count value of the first counting circuit 41 to the second counting circuit 42 before the count value of the second counting circuit 42 becomes zero does not happen. This means that the second counting circuit 42 surely becomes zero and outputs the zero flag signal z as a delay pulse signal when the count value becomes zero. Then, the second counting circuit 42 outputs the delay pulse signal z as shown in Fig. 11 z in the same operation as in case that the motor is being normally rotated. The delay pulse signal z is sent to the logical pulse generating circuit 3 and through the power supplying circuit 4, the conducting phase switching between the three-phase stator windings 11, 12 and 13 is operated in a successive manner. Thus, the motor is smoothly accelerated, resulting in obtaining good starting characteristic. In the embodiment shown in Fig. 6, clock frequencies to be supplied to the first and second counting circuits 41 and 42 are different from each other, but in this embodiment shown in Fig. 9, only one kind of clock frequency can be advantageously used.

In addition, in the pulse generating circuit shown in Fig. 9 as another embodiment of this invention, the clock signal to be inputted to the second counting circuit as the initial value is half in frequency that of the first counting circuit, but it may be of a fraction of an integer of that.

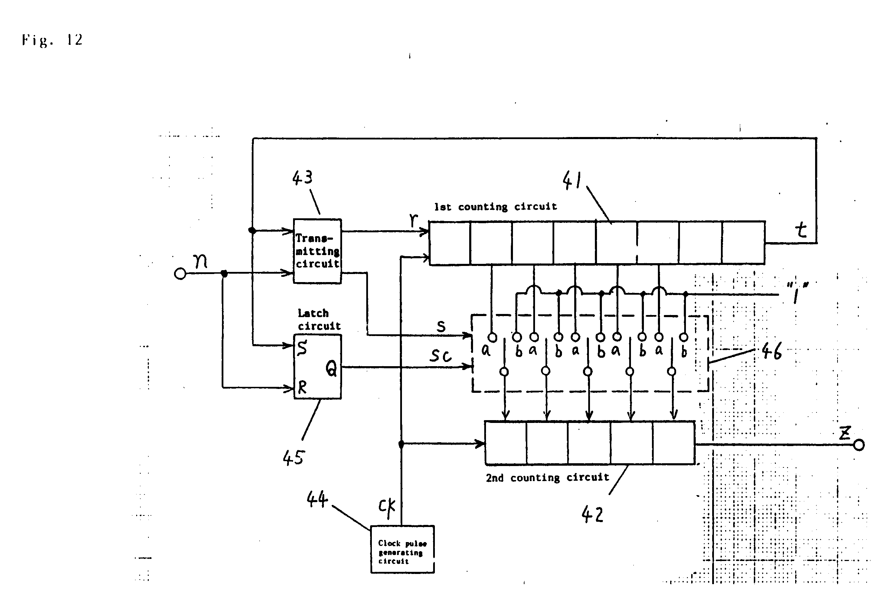

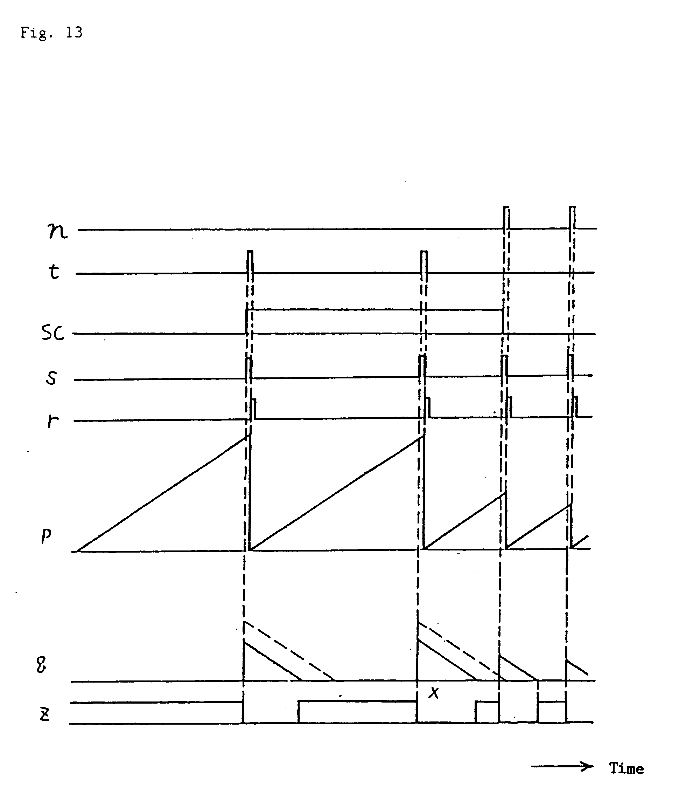

Fig. 12 is a block diagram of a pulse generating circuit showing further another example of the pulse generating circuit 2 shown in Fig. 1. Waveform of each member of the circuit shown in Fig. 12 when a motor is to be started is shown in Fig. 13.

In addition, members having the same functions as those of members shown in Figs. 6 and 9 have the same reference numerals and their explanations are omitted for the sake of eliminating duplication. Further in addition, signal waveform to be outputted from each member when the motor is being normally rotated is omitted here because it is the same as that shown in Fig. 10.

In Fig. 12, a first counting circuit 41 is made of an eight-bit digital counter and a second counting circuit 42 a five-bit digital counter. The first and second counting circuits 41 and 42 have the same clock pulse ck inputted. The first counting circuit 41 up-counts the clock pulse ck and the second counting circuit 42 down-counts the clock pulse ck. A switch transmitting circuit 46 is made of five switches, a transmission circuit 43 is connected by a load pulse s to a contact point a for a short period of time, and 5 bits excepting the least significant bit of the count value of the first counting circuit 41 are sent to the second counting circuit 42. Also, when the count value of the first counting circuit 41 is overflowed thereby outputting a carry flag signal t, the switch transmitting circuit 45 is connected to a contact point b for a short period of time and all bits of the second counting circuit 42 are set to "1".

The operation of the pulse generating circuit shown in Fig. 12 when the motor is being rotated normally will be explained below by referring to Fig. 10.

The count value p of the first counting circuit 41 is sent to the second counting circuit 42 at the timing of the load pulse s outputted from the transmitting circuit 43. In this case, however, bits excepting only the least significant bit of the count value of the first counting circuit 41 are sent to the second counting circuit 42, so that as shown in Fig. 10 q, the initial value to be given to the second counting circuit 42 becomes a value half the count value p of the first counting circuit 41. Thus, the second counting circuit 42 down-counts the value of p/2 equivalent to the half value of the count value obtained by counting the frequency of the pulse train n with the clock pulse of ck, and the count value thus down-counted becomes zero at the middle point of the pulse train n. As a result, the second counting circuit 42 outputs a delay pulse signal z as shown in Fig. 10. This means that rising edges of the delay pulse signal z are delayed by 30° in terms of electrical angle from the zero-crossing points of the counter electromotive forces a, b and c.

Next, the operation of this pulse generating circuit when the motor is to be started will be explained below by referring to Fig. 13. When to be started, the counter electromotive force detecting circuit 1 does not output the pulse train n, so that the first counting circuit 41 continues to up-count the clock pulse ck. As a result, the count value of the first counting circuit 41 is monotonously increased as shown in Fig. 13 q, and when the count value is overflowed, the first counting circuit 41 outputs the carry flag signal t to send it to the transmitting circuit 43 and the latch circuit 45. The transmission circuit 43 receives the signal t thus outputted and outputs the reset pulse r and load pulse s. The second counting circuit 42 has the initial value loaded by the load pulse s. In this case, however, suppose that the transmitting circuit 43 receives the pulse signal t and the value of p/2 (upper 7 bits) equivalent to the half value of the count value of the first counting circuit 41 is sent directly to the second counting circuit 42 of a 7-bit counter as the initial value as shown by the dotted line in Fig. 13 q. Then, as clear from the waveform shown by the dotted line in Fig. 13 q, such a case that the count value of the first counting circuit 41 is further sent to the second counting value 42 before the second counting circuit 42 down-counts the value of p/2 and its count value becomes zero may be happened when starting. In such a case, the count value of the second counting circuit 42 does not become zero, so that the delay pulse signal z cannot be outputted. As a result, a pulse x as shown in Fig. 13 z cannot be generated. Therefore, the phase switching cannot be properly operated between the stator windings, so that smooth acceleration of the motor cannot be expected.

Accordingly, in case that the motor is to be started, when the transmitting circuit 43 receives the signal t, the value of p/2 equivalent to the half value of the count value of the first counting circuit 41, that is, upper 7 bits excepting the least significant bit of the count value of the first counting circuit 41, is not sent directly to the second counting circuit 42, but by connecting the switch transmitting circuit 46 to the contact point b for a short period of time during transmission, such a predetermined value as shown by the continuous line in Fig. 13 q, which is smaller than the value of p/2 equivalent to the half value of the count value of the first counting circuit 41, is sent to the second counting circuit 42. Namely, 5 bits all of which are "1" are sent to the second counting circuit 42 in this case. Thus, as already explained above, such a case that the count value of the first counting circuit 41 is further sent to the second counting circuit 42 before the count value of the circuit 42 becomes zero can be prevented to happen, and the count value of the second counting circuit 42 surely becomes zero thereby to output the delay pulse signal z. Then, the second counting circuit 42 outputs the delay pulse signal z as shown in Fig. 13 z in the same operation as in case when the motor is being rotated normally. The pulse z thus outputted is sent to the logical pulse generating circuit 3, thus switching through the power supplying circuit 4 the conducting phases of stator windings 11, 12 and 13 in a successive manner. Thus, the motor can be smoothly accelerated, resulting in obtaining good starting characteristic.

The first and second counting circuits 41 and 42 shown in Fig. 6 are different in clock frequency to be supplied from each other, but the first and second counting circuits 41 and 42 shown in Fig. 12 as this example can advantageously use one kind of clock signal.

In addition, the second counting circuit 42 shown in Fig. 12 advantageously has the number of bits smaller than that of the second counting circuit 42 shown in Fig. 9.

Further in addition, in the pulse generating circuit shown in Fig. 12, as the initial value of the second counting circuit when normally rotating the motor, a value half the count value of the first counting circuit is selected, but it may be of a fraction of an integer of that.

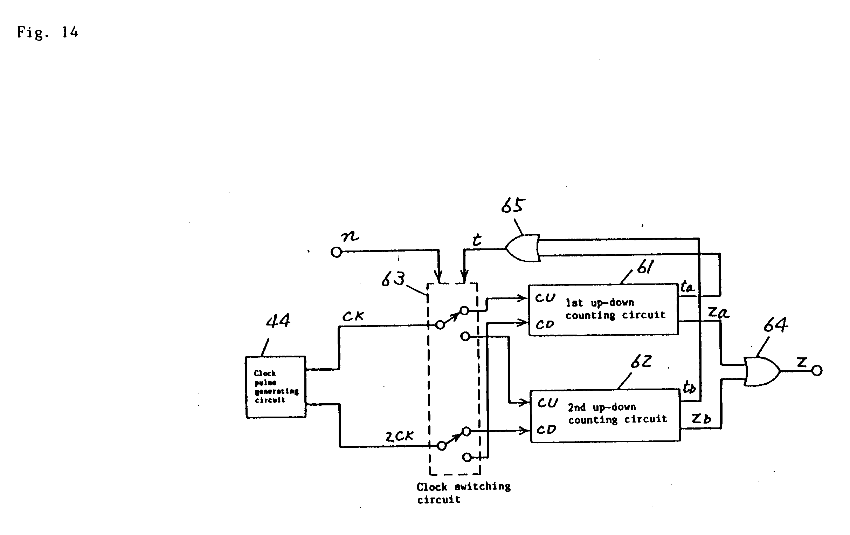

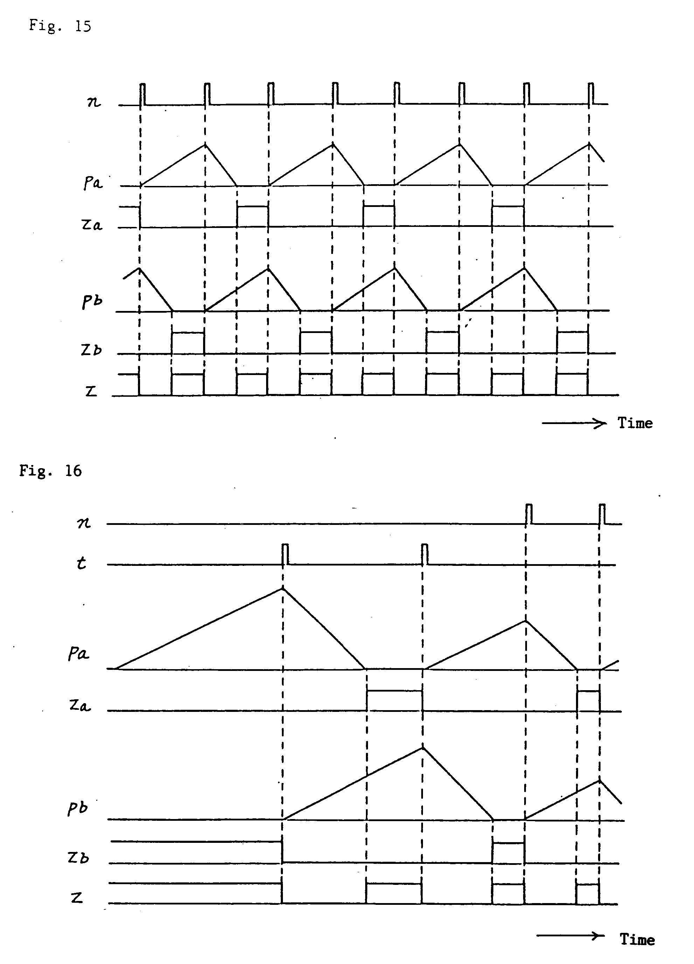

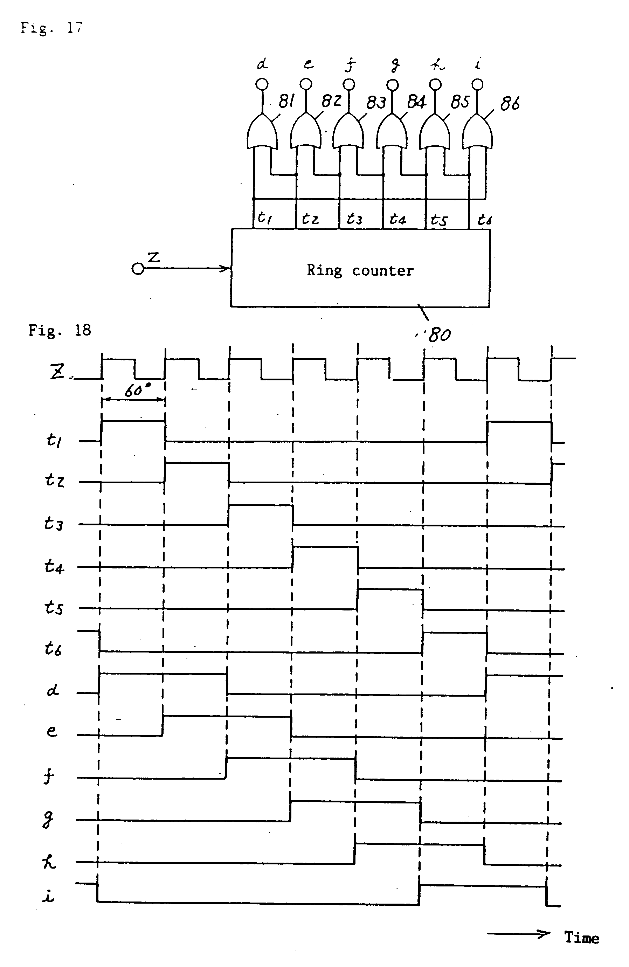

Fig. 14 is a block diagram of a pulse generating circuit showing still further example of the pulse generating circuit 2 shown in Fig. 1. Waveform of each member thereof when the motor is being rotated normally is shown in Fig. 15 and that when it is to be started is shown in Fig. 16.

In Fig. 14, 61 is a first up-down counting circuit and 62 is a second up-down counting circuit. The first up-down counting circuit 61 and the second up-down counting circuit 62 each has an up-count input CU and a down-count input CD. In addition, the first and second up-down counting circuits 61 and 62 up-count their inputted signals and when the count values are overflowed, output carry flag signals ta and tb, and on the other hand, down-count them and when their count values are respectively become zero, output zero flag signals za and zb, respectively. The two carry flag signals ta and tb are sent to an OR circuit 65 to output a signal t. A clock switching circuit 63 alternately operates to switch supplying two kinds of clock pulse, ck and 2ck (the clock frequency is two times as large as ck) outputted from the clock pulse generating circuit 44 between the up-count input CU and the down-count CD of each of the circuits 61 and 62 in response to the pulse n outputted from the counter electromotive force detecting circuit 1 and the signal t outputted from the OR circuit 65. Another OR circuit 64 receives the zero flag signals za and zb outputted from the respective first and second up-down counting circuits 61 and 62 thereby outputting a delay pulse signal z.

The operation of the pulse generating circuit shown in Fig. 14 when the permanent magnet rotor 27 is being normally rotated will be explained by referring to Fig. 15.

First, suppose that the switch of the clock switching circuit 63 is positioned as shown in Fig. 14. Then, the clock pulse ck is supplied to the up-count input CU of the first up-down counting circuit 61, and the first up-down counting circuit 61 continues to up-count the clock pulse ck until the pulse train n is inputted to the clock switching circuit 63. Next, when the pulse n is inputted to the clock switching circuit 63, the first up-down counting circuit 61 switches its operation to down-counting. Also, the clock pulse supplied to the down-count input CD of the up-down counting circuit 61 from the clock switching circuit 63 is of the value of 2ck, meaning that a clock having a clock frequency two times as large as the value of ck is inputted thereto. As a result, the count value obtained by up-counting the frequency of the pulse train n is down-counted with the clock pulse of 2ck, thus the count value becoming zero at the middle point of the pulse train n. This is shown in Fig. 15 pa. Therefore, the first up-down counting circuit 61 outputs a zero flag signal za as shown in Fig. 15. Similarly, the second up-down counting circuit 62 also repeats the up-down count operation as shown in Fig. 15 pb thereby outputting a zero flag signal zb as shown in Fig. 15. Since the zero flag signals za and zb are alternately generated, the OR circuit 64 outputs a pulse signal as shown in Fig. 15 z. So outputted that the pulse generating circuit shown in Fig. 14 outputs a delay pulse signal z whose rising edges are delayed in phase by 30° in terms of electrical angle from the zero-crossing points of the counter electromotive forces a, b and c.

Next, the operation of the pulse generating circuit shown in Fig. 14 when starting the motor will be explained below by referring to Fig. 16.

First, suppose that the switch of the clock switching circuit 63 is positioned as shown in Fig. 14. The first up-down counting circuit 61 up-counts the clock pulse ck until the clock switching circuit 63 receives the pulse n outputted from the counter electromotive force detecting circuit 1. However, as the rotor is stationary, the counter electromotive force detecting circuit 1 does not output the pulse n. As a result, the count value of the first up-down counting circuit 61 is increased monotonously as shown in 16 pa, and when it is overflowed, the first up-down counting circuit 61 outputs a carry flag signal ta to the clock switching circuit 63. Thus, the clock switching circuit 63 switches the first up-down counting circuit 61 from the up-counting operation to the down-counting operation in the same way as in the case when the motor is being rotated normally. In addition, since the clock of 2ck is supplied thereto, that is, the clock frequency is two times as large as ck, the up-counted count value is down-counted with the clock pulse of 2ck, and then, the count value will become zero. This is shown in Fig. 16 pa. As a result, the first up-down counting circuit 61 outputs a zero flag signal za as shown in Fig. 16. Similarly, the second up-down counting circuit 62 also repeats the up-down count operation as shown in Fig. 16 pb thereby outputting a zero flag signal zb as shown in Fig. 16. As the zero flag signals za and zb are alternately generated, the OR circuit 64 outputs a pulse signal z as shown in Fig. 16. The pulse signal z shown in Fig. 16 is equivalent to the pseudo output pulse when starting the motor. Then, the pulse z is sent to the logical pulse generating circuit 3 and thorough the power supplying circuit 4, switches the conducting phases of three-phase stator windings 11, 12 and 13 in a successive manner. As a result, the motor is smoothly accelerated, resulting in obtaining good starting characteristic of the same.

In each of the pulse generating circuits shown in Figs. 6, 9 and 12, the transmitting circuit for transmitting a count value of the first counting circuit to the second counting circuit is required to be used. However, the pulse generating circuit shown in Fig. 14 has no need to use such a transmitting circuit and the transmission of the count value as shown above can be advantageously effected only by switching the up- and down- count operations thereof using a clock switching circuit.

Fig. 17 is a block diagram of a logical pulse generating circuit 3 shown in Fig. 1. Signal waveform of each member thereof is shown in Fig. 18.

In Fig. 17, 80 is a six-phase ring counter and receives a pulse signal z outputted from a pulse generating circuit 2 to output six-phase pulse signals t₁, t₂, t₃, t₄, t₅ and t₆ as shown in Fig. 18. The pulse width between these pulse signals is 60° in terms of electrical angle. The reference numerals 81, 82, 83, 84, 85 and 86 are OR circuits and respectively receive the six-phase pulse signals t₁, t₂, t₃, t₄, t₅ and t₆ outputted from the ring counter 80 thereby to output six-phase position signals d, e, f, g, h, and i as shown in Fig. 18. The pulse width between these position signals is 120° in terms of electrical angle. The six-phase pulse signals d, e, f, g, h and i each becomes a position signal of a permanent magnet rotor 27 and is sent to a power supplying circuit 4 shown in Fig. 1.

As clear from the above descriptions, in a brushless DC motor in accordance with this invention, first of all, a counter electromotive force detecting circuit 1 detects zero-crossing points of the counter electromotive forces a, b and c respectively induced in the stator windings 11, 12 and 13 thereby to convert them into a pulse n. The pulse n is converted thorough a pulse generating circuit 2 into a delay pulse z which is delayed by 30° in terms of electrical angle from the pulse n. A logical pulse generating circuit 3 receives the pulse n to generate six-phase position signals d, e, f, g, h and i. Finally, a power supplying circuit 4 supplies drive currents j, k and l as shown in Fig. 3 bidirectionally to the stator windings 11, 12 and 13 in a successive manner, resulting in the rotation of a permanent magnet rotor 27.

As a result, a brushless DC motor of this invention makes it possible to provide a full wave drive motor capable of bidirectionally supplying an electric current to each of stator windings without using a position sensor such as the Hall sensor.

In addition, in the pulse generating circuit shown in Fig. 14, the clock frequency of a signal inputted to one of up-count and down-count input terminals is twice as large as the clock frequency of a signal inputted to the other of them, but it may be of an integer multiple of that.

Further in addition, a counter electromotive force detecting circuit 1 of this invention uses, as shown in Fig. 4, three resistors connected in common to detect an electric potential of the neutral point O of stator windings, however, it is needless to say that a signal line can be used by taking out directly from the neutral point of stator windings of a motor for this purpose. Still further in addition, in these embodiments of this invention described above, a motor to be used is limited to a three-phase motor having stator windings of Y (star) connection, but it is not limited thereto, being capable of using a motor of any number of phases. Also, a brushless DC motor of this invention can be applied to a motor having the stator windings of delta connection.

## Claims

1. A brushless DC motor comprising:
a plurality of stator windings (11, 12, 13);
counter electromotive force detecting means (1) for detecting zero-crossing points of counter electromotive forces respectively induced in said plurality of stator windings to obtain a pulse signal train responsive to the counter electromotive forces;
pulse generating means (2) for generating a delay pulse signal delayed from said pulse signal train;
logical pulse generating means (3) for generating a plurality of delay pulse signals in response to said delay pulse signal; and
power supply means (4) which receives an output signal from said logical pulse generating circuit as a position signal of a rotor for supplying an electric power to said plurality of stator windings in response to said position signal,
characterized in that said pulse generating means measures a period of said pulse signal train and generates, as said delay pulse signal, a signal delayed from said pulse signal train by a time proportional or approximately proportional to a period of said pulse signal train.

2. An brushless DC motor as claimed in claim 1, wherein said pulse generating means outputs a delay pulse signal delayed by a time 1/N (N is an integer) the period of said pulse signal train.

3. A brushless DC motor as claimed in claim 1, wherein said pulse generating means outputs a delay pulse signal delayed by a time half the period of said pulse signal train.

4. A brushless DC motor as claimed in claim 1, wherein said pulse generating means comprises:
first counter means (41) for counting a period of said pulse signal train;
transmitting means (43) for transmitting a count value of said first counter means to a second counter means;
second counter means (42) outputting a delay pulse signal delayed by a time proportional or approximately proportional to a period of said pulse signal train from said count value thus transmitted; and
clock pulse generating means (44) for outputting a clock signal to said first and second counter means.

5. A brushless DC motor as claimed in claim 4, wherein a clock signal frequency to be inputted to said second counter means is different from that to be inputted to said first counter means.

6. A brushless DC motor as claimed in claim 4, wherein a clock signal frequency to be inputted to said second counter means is of an integer multiple of that to be inputted to said first counter means.

7. A brushless DC motor as claimed in claim 4, wherein a clock signal frequency to be inputted to said second counter means is twice that to be inputted to said first counter means.

8. A brushless DC motor as claimed in claim 4, wherein said transmitting means transmits a value of a fraction of an integer of a count value counted through said first counter means to said counter means.

9. A brushless DC motor as claimed in claim 4, wherein said transmitting means transmits a value half a count value of said first counter means to said second counter means.

10. A brushless DC motor as claimed in claim 1, wherein said pulse generating means comprises:
first and second up-down counter means (61, 62) in which up-count operation and down-count operation can be switched in response to a pulse signal train generated by said counter electromotive force detecting means and when one of said first and second up-down counter means has the up-count operation, the other has the down-count operation; and
clock generating means (44) for outputting a clock signal to said first and second up-down counter means.

11. A brushless DC motor as claimed in claim 10, wherein said first and second up-down counter means each has an up-count input terminal and down-count input terminal and a clock signal frequency to be inputted to the up-count input terminal is different from that to be inputted to the down-count input terminal.

12. A brushless DC motor as claimed in claim 10, wherein said first and second up-down counter means each has an up-count input terminal and down-count input terminal and a clock signal frequency to be inputted to count input terminals of one of said first and second up-down counter means is of an integer multiple of that to be inputted to those of the other.

13. A brushless DC motor as claimed in claim 10, wherein said first and second counter means each has an up-count input terminal and down-count input terminal and a clock signal frequency to be inputted to count input terminals of one of said first and second up-down counter means is twice that to be inputted to those of the other.

14. A brushless DC motor as defined in claim 1, wherein said pulse generating means (2) generates the delay pulse signal delayed by the time proportional or approximately proportional to the period of said pulse signal train when the period of said pulse signal train is within a predetermined range and a pseudo output pulse signal when the period of said pulse signal train exceeds said predetermined range.

15. A brushless DC motor as claimed in claim 4, wherein said transmitting means transmits a different initial value to said second counter means in response to a count value of said first counter means.

16. A brushless DC motor as claimed in claim 4, wherein when a count value of said first counter means is within a predetermined range, said transmitting means transmits a value proportional or approximately proportional to the count value to said second counter means and when exceeding the predetermined range, said transmitting means transmits a constant value to said second counter means.

17. A brushless DC motor as claimed in claim 16, wherein when a count value of said first counter means is within a predetermined range, said transmitting means transmits a value of a fraction of an integer of the count value to said second counter means.

18. A brushless DC motor as claimed in claim 16, wherein when a count value of said first counter means is within a predetermined range, said transmitting means transmits a value half the count value to said second counter means.

## Patentansprüche

1. Bürstenloser Gleichstrom- (DC-) Motor, der aufweist:
eine Mehrzahl Statorwicklungen (11, 12, 13); eine elektromotorische eine Gegenkraft ermittelnde Einrichtung (1) zur jeweiligen Ermittlung von Null-Durchgangspunkten elektromotorischer Gegenkräfte, die jeweils in der Mehrzahl der Statorwicklungen induziert werden, um einen Impulssignalzug entsprechend den elektromotorischen Gegenkräften zu erhalten;
eine Impulserzeugungseinrichtung (2) zur Erzeugung eines Verzögerungsimpulssignals, das gegenüber dem Impulssignalzug verzögert ist;
eine logische Impulserzeugungseinrichtung (3) zur Erzeugung einer Mehrzahl Verzögerungsimpulssignale in Abhängigkeit des Verzögerungsimpulssignals, und eine Energieversorgungseinrichtung (4), die ein Ausgangssignal von dem logischen Impulserzeugungsschaltkreis als ein Positionssignal eines Rotors zur Zuführung einer elektrischen Leistung zu der Mehrzahl Statorwicklungen in Abhängigkeit des Positionssignals empfängt,
dadurch gekennzeichnet, daß die Impulserzeugungseinrichtung eine Periode des Impulssignalzugs mißt und, als das Verzögerungsimpulssignal, ein Signal erzeugt, das zu dem Impulssignalzug um eine Zeit proportional oder ungefähr proportional zu einer Periode des Impulssignalzugs verzögert ist.

2. Bürstenloser DC-Motor nach Anspruch 1, wobei die Impulserzeugungseinrichtung ein Verzögerungsimpulssignal erzeugt, das um eine Zeit 1/N (N ist eine ganze Zahl) der Periode des Impulssignalszug verzögert ist.

3. Bürstenloser DC-Motor nach Anspruch 1, wobei die Impulserzeugungseinrichtung ein Verzögerungsimpulssignal verzögert um eine Zeit entsprechend der Hälfte der Periode des Impulssignalzugs abgibt.

4. Bürstenloser DC-Motor nach Anspruch 1, wobei die Impulserzeugungseinrichtung aufweist:
eine erste Zähleinrichtung (41) zum Zählen einer Periode des Impulssignalzugs;
eine Übertragungseinrichtung (43) zum Übertragen eines Zählwerts der ersten Zähleinrichtung zu einer zweiten Zähleinrichtung;
wobei die zweite Zähleinrichtung (42) ein Verzögerungsimpulssignal verzögert um eine Zeit proportional oder ungefähr proportional einer Periode des Impulssignalszugs zu dem Zählwert, der so übertragen wird, abgibt; und
eine Taktimpulserzeugungseinrichtung (44) zur Ausgabe eines Taktsignals zu der ersten und der zweiten Zähleinrichtung.

5. Bürstenloser DC-Motor nach Anspruch 4, wobei eine Taktsignalfrequenz, die der zweiten Zähleinrichtung eingegeben werden soll, zu derjenigen, die zu der ersten Zähleinrichtung eingegeben werden soll, unterschiedlich ist.

6. Bürstenloser DC-Motor nach Anspruch 4, wobei eine Taktsignalfrequenz, die der zweiten Zähleinrichtung eingegeben werden soll, ein ganzzahliges Vielfaches derjenigen ist, die der ersten Zähleinrichtung eingegeben werden soll.

7. Bürstenloser DC-Motor nach Anspruch 4, wobei eine Taktsignalfrequenz, die der zweiten Zähleinrichtung eingegeben werden soll, zweimal derjenigen ist, die der ersten Zähleinrichtung eingegeben werden soll.

8. Bürstenloser DC-Motor nach Anspruch 4, wobei die Übertragungseinrichtung einen Wert eines Bruchteils eines Ganzzahligen eines Zählwerts, der durch die erste Zähleinrichtung gezählt wird, zu der Zähleinrichtung überträgt.

9. Bürstenloser DC-Motor nach Anspruch 4, wobei die Übertragungseinrichtung einen Wert einer Hälfte eines Zählwerts der ersten Zähleinrichtung zu der zweiten Zähleinrichtung überträgt.

10. Bürstenloser DC-Motor nach Anspruch 1, wobei die Impulserzeugungseinrichtung aufweist:
eine erste und eine zweite Aufwärts-Abwärts-Zähleinrichtung (61, 62), in der ein Aufwärtszählvorgang und ein Abwärtszählvorgang in Abhängigkeit eines Impulssignalzugs umgeschaltet werden kann, der durch die eine elektromotorische Gegenkraft ermittelnde Einrichtung erzeugt wird, und wenn eine der ersten und zweiten Aufwärts-Abwärts-Zähleinrichtung den Aufwärtszählvorgang besitzt, die andere den Abwärtszählvorgang besitzt; und
eine Takterzeugungseinrichtung (44) zur Ausgabe eines Taktsignals zu der ersten und der zweiten Aufwärts-Abwärts-Zähleinrichtung.

11. Bürstenloser DC-Motor nach Anspruch 10, wobei die erste und die zweite Aufwärts-Abwärts-Zähleinrichtung jeweils einen Aufwärtszähl-Eingangsanschluß und einen Abwärtszähl-Eingangsanschluß besitzt, und eine Taktsignalfrequenz, die zu dem Aufwärtszähl-Eingangsanschluß eingegeben werden soll, zu derjenigen, die zu dem Abwärtszähl-Eingangsanschluß eingegeben werden soll, unterschiedlich ist.

12. Bürstenloser DC-Motor nach Anspruch 10, wobei die erste und die zweite Aufwärts-Abwärts-Zähleinrichtung jeweils einen Aufwärtszähl-Eingangsanschluß und einen Abwärtszähl-Eingangsanschluß besitzt, und eine Taktsignalfrequenz, die den Zähl-Eingangsanschlüssen einer der ersten und zweiten Aufwärts-Abwärts-Zähleinrichtung eingegeben werden soll, ein ganzzahliges Vielfaches derjenigen ist, die zu denjenigen der anderen eingegeben werden sollen.

13. Bürstenloser DC-Motor nach Anspruch 10, wobei die erste und die zweite Zähleinrichtung jeweils einen Aufwärtszähl-Eingangsanschluß und einen Abwärtszähl-Eingangsanschluß besitzt, und eine Taktsignalfrequenz, die zu den Zähl-Eingangsanschlüssen einer der ersten und zweiten Aufwärts-Abwärts-Zähleinrichtung eingegeben werden soll, zweimal derjenigen ist, die zu denjenigen der anderen eingegeben werden sollen.

14. Bürstenloser DC-Motor nach Anspruch 1, wobei die Impulserzeugungseinrichtung (2) das Verzögerungsimpulssignal verzögert um die Zeit proportional oder ungefähr proporional zu der Periode des Impulssignalzugs, wenn die Periode des Impulssignalzugs innerhalb eines vorbestimmten Bereichs liegt, und ein Pseudo-Ausgangsimpulssignal erzeugt, wenn die Periode des Impulssignalzugs den vorbestimmten Bereich überschreitet.

15. Bürstenloser DC-Motor nach Anpspruch 4, wobei die Übertragungseinrichtung einen unterschiedlichen, anfänglichen Wert zu der zweiten Zähleinrichtung in Abhängigkeit eines Zählwerts der ersten Zähleinrichtung überträgt.

16. Bürstenloser DC-Motor nach Anspruch 4, wobei dann, wenn ein Zählwert der ersten Zähleinrichtung innerhalb eines vorbestimmten Bereichs liegt, die Übertragungseinrichtung einen Wert proportional oder ungefähr proportional zu dem Zählwert der zweiten Zähleinrichtung überträgt, und wenn der vorbestimmte Bereich überschritten wird, die Übertragungseinrichtung einen konstanten Wert zu der zweiten Zähleinrichtung überträgt.

17. Bürstenloser DC-Motor nach Anspruch 16, wobei dann, wenn ein Zählwert der ersten Zähleinrichtung innerhalb eines vorbestimmten Bereichs liegt, die Übertragungseinrichtung einen Wert eines Bruchteils eines ganzzahligen Zählwerts der zweiten Zähleinrichtung überträgt.

18. Bürstenloser DC-Motor nach Anspruch 16, wobei dann, wenn ein Zählwert der ersten Zähleinrichtung innerhalb eines vorbestimmten Bereichs liegt, die Übertragungseinrichtung einen Wert der Hälfte des Zählwerts der zweiten Zähleinrichtung überträgt.

## Revendications

1. Moteur à courant continu sans balai comprenant :
plusieurs enroulements de stator (11, 12, 13) ;
un moyen de détection de force contre-électromotrice (1) pour détecter des points de passage au zéro de forces contre-électromotrices induites, respectivement, dans lesdits enroulements de stator pour obtenir un train de signaux impulsionnels sensibles aux forces contre-électromotrices ;
un moyen générateur d'impulsions (2) pour produire un signal impulsionnel retardé par rapport audit train de signaux impulsionnels ;
un moyen logique générateur d'impulsions (3) pour produire plusieurs signaux impulsionnels retardés en réponse audit signal impulsionnel retardé ; et
un moyen de délivrance de courant (4) qui reçoit un signal de sortie issu dudit moyen logique générateur d'impulsions, comme signal de position d'un rotor, pour délivrer un courant électrique auxdits plusieurs enroulements de stator en réponse audit signal de position ;
caractérisé en ce que ledit moyen générateur d'impulsions mesure la période dudit train de signaux impulsionnels et produit, comme signal impulsionnel retardé, un signal retardé, par rapport audit train de signaux impulsionnels, d'un temps proportionnel, ou à peu près proportionnel, à la période dudit train de signaux impulsionnels.

2. Moteur à courant continu sans balai selon la revendication 1, dans lequel ledit moyen générateur d'impulsions sort un signal impulsionnel retardé, retardé d'un temps qui est 1/N (N étant un nombre entier) de la période dudit train de signaux impulsionnels.

3. Moteur à courant continu sans balai selon la revendication 1, dans lequel ledit moyen générateur d'impulsions sort un signal impulsionnel retardé, retardé d'un temps moitié de la période dudit train de signaux impulsionnels.

4. Moteur à courant continu sans balai selon la revendication 1, dans lequel ledit moyen générateur d'impulsions comprend :
un premier moyen de comptage (41) pour compter la période dudit train de signaux impulsionnels ;
un moyen de transmission (43) pour transmettre une valeur comptée dudit premier moyen de comptage à un second moyen de comptage ;
un second moyen de comptage (42) sortant un signal impulsionnel retardé, retardé par rapport à ladite valeur comptée ainsi transmise d'un temps proportionnel, ou à peu près proportionnel, à la période dudit train de signaux impulsionnels ; et
un moyen générateur d'impulsions d'horloge (44) pour sortir un signal d'horloge vers lesdits premier et second moyens de comptage.

5. Moteur à courant continu sans balai selon la revendication 4, dans lequel une fréquence de signal d'horloge à entrer dans ledit second moyen de comptage est différente de celle à entrer dans ledit premier moyen de comptage.

6. Moteur à courant continu sans balai selon la revendication 4, dans lequel une fréquence de signal d'horloge à entrer dans ledit second moyen de comptage est un multiple entier de celle à entrer dans ledit premier moyen de comptage.

7. Moteur à courant continu sans balai selon la revendication 4, dans lequel une fréquence de signal d'horloge à entrer dans ledit second moyen de comptage est deux fois celle à entrer dans ledit premier moyen de comptage.

8. Moteur à courant continu sans balai selon la revendication 4, dans lequel ledit moyen de transmission transmet audit second moyen de comptage une valeur égale à une fraction d'un nombre entier d'une valeur comptée par ledit premier moyen de comptage.

9. Moteur à courant continu sans balai selon la revendication 4, dans lequel ledit moyen de transmission transmet audit second moyen de comptage une valeur moitié d'une valeur comptée par ledit premier moyen de comptage.

10. Moteur à courant continu sans balai selon la revendication 1, dans lequel ledit moyen générateur d'impulsions comprend :
des premier et second moyens de comptage bidirectionnel (61, 62) où le fonctionnement de comptage en croissant et le fonctionnement de comptage en décroissant peuvent être commutés en réponse à un train de signaux impulsionnels produit par ledit moyen de détection de force contre-électromotrice, et où, si l'un desdits premier et second moyens de comptage bidirectionnel compte en croissant, l'autre compte en décroissant ; et
un moyen générateur d'horloge (44) pour sortir un signal d'horloge vers lesdits premier et second moyens de comptage bidirectionnel.

11. Moteur à courant continu sans balai selon la revendication 10, dans lequel lesdits premier et second moyens de comptage bidirectionnel ont chacun une borne d'entrée de comptage en croissant et une borne d'entrée de comptage en décroissant et dans lequel la fréquence d'un signal d'horloge à entrer sur la borne d'entrée de comptage en croissant est différente de celle à entrer sur la borne de comptage en décroissant.

12. Moteur à courant continu sans balai selon la revendication 10, dans lequel lesdits premier et second moyens de comptage bidirectionnel ont chacun une borne d'entrée de comptage en croissant et une borne d'entrée de comptage en décroissant et dans lequel la fréquence d'un signal d'horloge à entrer sur les bornes d'entrée de comptage de l'un desdits premier et second moyens de comptage bidirectionnel est un multiple entier de celle à entrer sur celles de l'autre.

13. Moteur à courant continu sans balai selon la revendication 10, dans lequel lesdits premier et second moyens de comptage ont chacun une borne d'entrée de comptage en croissant et une borne d'entrée de comptage en décroissant et dans lequel la fréquence d'un signal d'horloge à entrer sur les bornes d'entrée de comptage de l'un desdits premier et second moyens de comptage bidirectionnel est deux fois celle à entrer sur celles de l'autre.

14. Moteur à courant continu sans balai selon la revendication 1, dans lequel ledit moyen générateur d'impulsions (2) produit le signal impulsionnel retardé, retardé d'un temps proportionnel, ou à peu près proportionnel, à la période dudit train de signaux impulsionnels, lorsque la période dudit train de signaux impulsionnels est à l'intérieur d'une plage prédéterminée, et un pseudo signal impulsionnel de sortie lorsque la période dudit train de signaux impulsionnels dépasse ladite plage prédéterminée.

15. Moteur à courant continu sans balai selon la revendication 4, dans lequel ledit moyen de transmission transmet une valeur initiale différente audit second moyen de comptage en réponse à une valeur comptée dudit premier moyen de comptage.

16. Moteur à courant continu sans balai selon la revendication 4, dans lequel, lorsqu'une valeur comptée dudit premier moyen de comptage est à l'intérieur d'une plage prédéterminée, ledit moyen de transmission transmet audit second moyen de comptage une valeur proportionnelle ou à peu près proportionnelle à la valeur comptée, et dans lequel lorsqu'elle dépasse la plage prédéterminée, ledit moyen de transmission transmet audit second moyen de comptage une valeur constante.

17. Moteur à courant continu sans balai selon la revendication 16, dans lequel, lorsqu'une valeur comptée dudit premier moyen de comptage est à l'intérieur d'une plage prédéterminée, ledit moyen de transmission transmet audit second moyen de comptage une valeur qui est une fraction d'un nombre entier de la valeur comptée.

18. Moteur à courant continu sans balai selon la revendication 16, dans lequel, lorsqu'une valeur comptée dudit premier moyen de comptage est à l'intérieur d'une plage prédéterminée, ledit moyen de transmission transmet audit second moyen de comptage une valeur moitié de la valeur comptée.
